# EUROPEAN PATENT APPLICATION

(11) **EP 4 817 692 A2**
(43) Date of publication of application: **07.10.2026**
(21) Application number: 26200915.2
(22) Date of filing: 21.02.2024
(51) Int. Cl.: A63B 21/00

(54) **OUTPUT DEVICE AND OUTPUT ASSEMBLY**

(30) Priority: 21.02.2023 CN 202310172558; 21.02.2023 CN 202310180437; 21.02.2023 CN 202310203074; 21.02.2023 CN 202310186423; 21.02.2023 CN 202320356894 U; 21.02.2023 CN 202320346128 U; 21.02.2023 CN 202320391256 U; 21.02.2023 CN 202320364243 U; 17.07.2023 CN 202321879489 U; 28.09.2023 CN 202322680388 U
(62) Document number(s) of the earlier application(s) in accordance with Art. 76 EPC: 24759711.5 / 4 672 567
(71) Applicant: Beyond Power Inc., Shenzhen, Guangdong 518114 (CN)
(72) Inventor: ZHOU, Changxing, Shenzhen, 518114 (CN); HUANG, Sirong, Shenzhen, 518114 (CN); CHEN, Juncheng, Shenzhen, 518114 (CN); PAN, Hongtao, Shenzhen, 518114 (CN); YIN, Hang, Shenzhen, 518114 (CN); HE, Jiale, Shenzhen, 518114 (CN); YI, Jiahao, Shenzhen, 518114 (CN); MAI, Jiehong, Shenzhen, 518114 (CN); ZUO, Qianbin, Shenzhen, 518114 (CN)
(74) Representative: De Arpe Tejero, Manuel

(57) **Abstract**

An output device includes: an output device body; and a connecting structure (200), fixedly connected to the output device body and configured to be coupled to and locked with a base (400). The connecting structure (200) includes an engaging member (210), an insertion groove (203) is defined on the connecting structure (200), an opening (201) is defined on a sidewall of the insertion groove (203). The engaging member (210) is rotatable about a rotation shaft (202) located outside the insertion groove (203). A distal end of the engaging member (210) is extended into the insertion groove (203) through the opening (201), the engaging member (210) is configured to be engaged into a limiting groove (410) defined on a peripheral wall of the base (400) after the base (400) is inserted into the insertion groove (203) along a first direction.

## Description

### TECHNICAL FIELD

The present disclosure relates to the technical field of output devices, and in particular, to an output device.

### BACKGROUND

Cable-type output devices are a widely used category of output devices. This type of device usually applies resistance or power to a cable. During use, a user exercises by reciprocally pulling the cable or being driven by the cable. The cable-type output device uses a reel as a storage device for the cable. A cable head of the cable is generally fixed to an end portion of a side of the reel, and then the cable can be wound around an axial direction of the reel, which facilitates retraction and release of the cable.

The output device needs to bear a large load during use and may be subjected to a large torque, demanding high structural reliability of the output device.

### SUMMARY OF THE INVENTION

The present disclosure provides an output device.

According to a first aspect of the present disclosure, the output device according to an embodiment of the present disclosure includes: an output device body; and a connecting structure, fixedly connected to the output device body and configured to be coupled to and locked with a base. The connecting structure may include an engaging member, an insertion groove is defined on the connecting structure, an opening is defined on a sidewall of the insertion groove, and the engaging member is rotatable about a rotation shaft located outside the insertion groove. A distal end of the engaging member is extended into the insertion groove through the opening, the engaging member is configured to be engaged into a limiting groove defined on a peripheral wall of the base after the base is inserted into the insertion groove along a first direction, and the base and the connecting structure are locked with each other in the first direction. A first guiding slope is provided on an outer sidewall of the engaging member. When the connecting structure rotates relative to the base along a peripheral direction of the insertion groove, a contact position between the first guiding slope and an inner sidewall of the limiting groove gradually moves toward the distal end of the engaging member until the distal end of the engaging member is unlocked from the limiting groove, and the base and the connecting structure are unlocked from each other in the first direction.

In some embodiments, a second guiding slope may be provided on the inner sidewall of the limiting groove, and when the connecting structure rotates relative to the base along the peripheral direction of the insertion groove, the second guiding slope may be configured to abut against the engaging member and guide the engaging member to disengage from the limiting groove.

In some embodiments, an engaging surface and a third guiding slope may be provided on the engaging member. When the base may be inserted into the insertion groove along the first direction, the engaging surface may be configured to contact a top wall of the limiting groove, and the engaging surface may be engaged with the limiting groove in the first direction. The third guiding slope may be configured to abut against the connecting structure and guide the engaging member to rotate outward away from the limiting groove.

In some embodiments, at least one of the following may be satisfied: first guiding slopes may be respectively provided on two opposite outer sidewalls of the engaging member, and a distance between the two first guiding slopes gradually decreases from a proximal end of the engaging member to the distal end of the engaging member; or second guiding slopes may be respectively provided on two opposite inner sidewalls of the limiting groove along a peripheral direction of the base, and a distance between the two second guiding slopes gradually decreases from an outer side of the base to an inner side of the base along a radial direction of the base.

In some embodiments, there may be a plurality of engaging members, and there may be a plurality of limiting grooves, the plurality of engaging members may be arranged at intervals along a peripheral direction of the connecting structure, the plurality of limiting grooves may be arranged at intervals along a peripheral direction of the base, and the plurality of limiting grooves and the plurality of engaging members may be arranged in one-to-one correspondence.

In some embodiments, the output device may further include: a locking member, movably disposed on the connecting structure. When a corresponding one of the plurality of engaging members may be engaged into a corresponding one of the plurality of limiting grooves, the locking member may be configured to be movable relative to the connecting structure and abut against the corresponding one of the plurality of engaging members to limit the movement of the corresponding one of the plurality of engaging members. The locking member may include a first position configured to allow the corresponding one of the plurality of engaging members to move freely, and a second position configured to limit the movement of the corresponding one of the plurality of engaging members. The locking member may be configured to move between the first position and the second position. The locking member may be annular and may be rotatable relative to the connecting structure to rotate to the first position or the second position.

In some embodiments, the locking member may be provided with a limiting protrusion and a clearance slot. When the locking member moves to the second position, the limiting protrusion may be configured to abut against the corresponding one of the plurality of engaging members to limit the movement of the corresponding one of the plurality of engaging members. When the locking member moves to the first position, the clearance slot may be overlapped with the corresponding one of the plurality of engaging members, so that the corresponding one of the plurality of engaging members has t freedom of movement to be unlocked from the limiting groove.

In some embodiments, the locking member may further include: a fourth guiding slope, connecting a corresponding limiting protrusion and an adjacent corresponding clearance slot. A height of the fourth guiding slope gradually increases from the corresponding clearance slot to the corresponding limiting protrusion.

In some embodiments, the locking member may be provided with a first top block. When the locking member moves to the second position, the first top block may be configured to abut against the base in the first direction.

In some embodiments, a fifth guiding slope may be provided on a side of the base facing the connecting structure. Along a moving direction of the locking member, a height of the fifth guiding slope in the first direction gradually changes. When the locking member moves to the second position, the first top block may be configured to abut against the fifth guiding slope.

In some embodiments, at least one of the following may be satisfied: the connecting structure may be further provided with a force-applying member, the force-applying member may be disposed around the rotation shaft of the engaging member, two ends of the force-applying member may be configured to respectively abut against the engaging member and the connecting structure, and the force-applying member may be configured to bias the engaging member toward the limiting groove to keep the engaging member engaged with the limiting groove; or when the engaging member may be engaged with the limiting groove, a force exerted by the limiting groove on the engaging member may be perpendicular to a movement direction of the engaging member when the engaging member may be unlocked from the limiting groove.

In some embodiments, the output device may further include: a guiding protrusion, configured to be retractable, where an extending-retraction direction of the guiding protrusion intersects with the first direction; an elastic member, configured to cooperate with the guiding protrusion to keep the guiding protrusion biased outward; and a guiding groove, configured to receive the guiding protrusion after the guiding protrusion extends outward, where one of the guiding protrusion and the guiding groove may be disposed on the base, and the other of the guiding protrusion and the guiding groove may be disposed on the connecting structure. When the base and the connecting structure may be locked with each other, the guiding protrusion may be embedded in the guiding groove. When the connecting structure rotates relative to the base along the peripheral direction of the insertion groove, the guiding protrusion may be configured to retract and pass over the guiding groove.

In some embodiments, the insertion groove may be annular, the connecting structure may include an inner component and an outer component, the insertion groove may be defined by the inner component and the outer component, and the guiding protrusion may be disposed in the inner component and partially exposed into the insertion groove from the inner component.

In some embodiments, at least one of the following may be satisfied: a deformable second top block may be disposed on a side of the connecting structure facing the base, and when the connecting structure may be locked with the base, the second top block may be configured to abut against the base; or a deformable third top block may be disposed on a side of the base facing the connecting structure, and when the connecting structure may be locked with the base, the third top block may be configured to abut against the connecting structure.

In some embodiments, the connecting structure may include at least two electrical contacts located at different positions, and the electrical contacts may be connected to a short-circuit detection apparatus. There may be four electrical contacts, which may be respectively located at four corners of the connecting structure.

Additional aspects and advantages of the present disclosure will be partly given in the following description, and partly will become apparent from the following description, or will be learned through the practice of the present disclosure.

### BRIEF DESCRIPTION OF THE DRAWINGS

The above and/or additional aspects and advantages of the present disclosure will become apparent and easily understood from the description of the embodiments in conjunction with the accompanying drawings.
FIG. 1 is an exploded structural view of a connecting structure according to an embodiment of the present disclosure.
FIG. 2 is a partial enlarged view of portion A in FIG. 1.
FIG. 3 is a perspective structural view of a connecting structure according to some embodiments of the present disclosure.
FIG. 4 is a structural view of a connecting structure according to some embodiments of the present disclosure.
FIG. 5 is a sectional view along section B-B in FIG. 4.
FIG. 6 is a sectional view along section C-C in FIG. 4.
FIG. 7a is a schematic diagram of a cooperation between an engaging member and a first limiting groove according to some embodiments of the present disclosure.
FIG. 7b is a schematic diagram of another cooperation between an engaging member and a first limiting groove according to some embodiments of the present disclosure.
FIG. 7c is a schematic diagram of yet another cooperation between an engaging member and a first limiting groove according to some embodiments of the present disclosure.
FIG. 7d is a schematic diagram of yet another cooperation between an engaging member and a first limiting groove according to some embodiments of the present disclosure.
FIG. 8 is a perspective structural view of the engaging member according to some embodiments of the present disclosure.
FIG. 9 is a structural view of a base according to some embodiments of the present disclosure.
FIG. 10 is a side view of a base according to some embodiments of the present disclosure.
FIG. 11 is a sectional view along section D-D in FIG. 10.
FIG. 12 is a perspective structural view of a connecting structure according to some embodiments of the present disclosure.
FIG. 13 is a structural view of a connecting structure according to some embodiments of the present disclosure.
FIG. 14 is a sectional view along section E-E in FIG. 13.
FIG. 15 is a side view of a connecting structure according to some embodiments of the present disclosure.
FIG. 16 is a sectional view along section F-F in FIG. 15.
FIG. 17 is a perspective structural view of a limiting protrusion according to some embodiments of the present disclosure.
FIG. 18 is a perspective structural view of a locking member according to some embodiments of the present disclosure.
FIG. 19 is a perspective structural view of a locking member from another angle according to some embodiments of the present disclosure.
FIG. 20 is a perspective structural view of a locking member from another angle according to some embodiments of the present disclosure.
FIG. 21 is a perspective structural view of a locking member from another angle according to some embodiments of the present disclosure.

### DETAILED DESCRIPTION

Embodiments of the present disclosure are described in detail below, and examples of the embodiments are shown in accompanying drawings, and the same or similar reference numerals represent the same or similar elements or elements having the same or similar functions. The embodiments described below with reference to the accompanying drawings are illustrative and are intended to explain the present disclosure and should not be construed as limiting the present disclosure.

In the description of the present disclosure, it should be understood that terms such as "center", "longitudinal", "transverse/lateral", "length", "width", "thickness", "up", "down", "front", "back", "left", "right", "vertical", "horizontal", "top", "bottom", "inner", "outer", "clockwise", "counterclockwise", etc., indicate orientations or positional relationships based on orientations or positional relationships shown in the accompanying drawings. These terms are used only for the convenience of describing the present disclosure and simplifying the description, and are not intended to indicate or imply that an apparatus or an element must have a specific orientation, be constructed and operated in a specific orientation, and therefore should not be construed as limiting the present disclosure. Additionally, terms such as "first" and "second" are used for descriptive purposes only and should not be construed as indicating or implying relative importance or implicitly indicating the number of technical features. Thus, features defined by "first" and "second" may explicitly or implicitly include one or more of the features. In the description of the present disclosure, the term "plurality of" means two or more, unless otherwise clearly and specifically defined.

In the description of the present disclosure, it should be noted that unless otherwise defined explicitly and specifically, terms such as "mount", "connect", "connection" should be understood broadly. For example, "connection" may be a fixed connection, a detachable connection, or an integral connection; or may be a mechanical connection, an electrical connection, or mutual communication; or may be a direct connection or an indirect connection through an intermediate media, or may be an internal connection of two elements or an interaction relationship between two elements. For those having ordinary skill in the art, specific meanings of the foregoing terms in the present disclosure may be understood according to specific situations.

In the present disclosure, unless otherwise defined explicitly and specifically, a first feature being "above" or "below" a second feature may include the first feature and the second feature being in direct contact, or may include the first and second features not being in direct contact but being in contact by using an additional feature between them. Moreover, a first feature being "above", "upward", and "on" a second feature may include the first feature being directly above and obliquely above the second feature, or only indicate that the first feature has a higher horizontal height than the second feature. A first feature being "below", "beneath" and "underneath" the second feature includes the first feature being directly below and obliquely below the second feature, or only indicate that the first feature has a smaller horizontal height than the second feature.

The following disclosure provides many different embodiments or examples to implement different structures of the present disclosure. To simplify the disclosure of the present disclosure, components and arrangements of specific embodiments are described below. Of course, these are only examples and are not intended to limit the present disclosure. Additionally, the present disclosure may repeat reference numerals and/or reference letters in different embodiments for the purpose of simplicity and clarity, which does not indicate a relationship between the various embodiments and/or arrangements discussed. Furthermore, the present disclosure provides embodiments of various specific processes and material, but those having ordinary skill in the art may be aware of the application of other processes and/or the use of other materials.

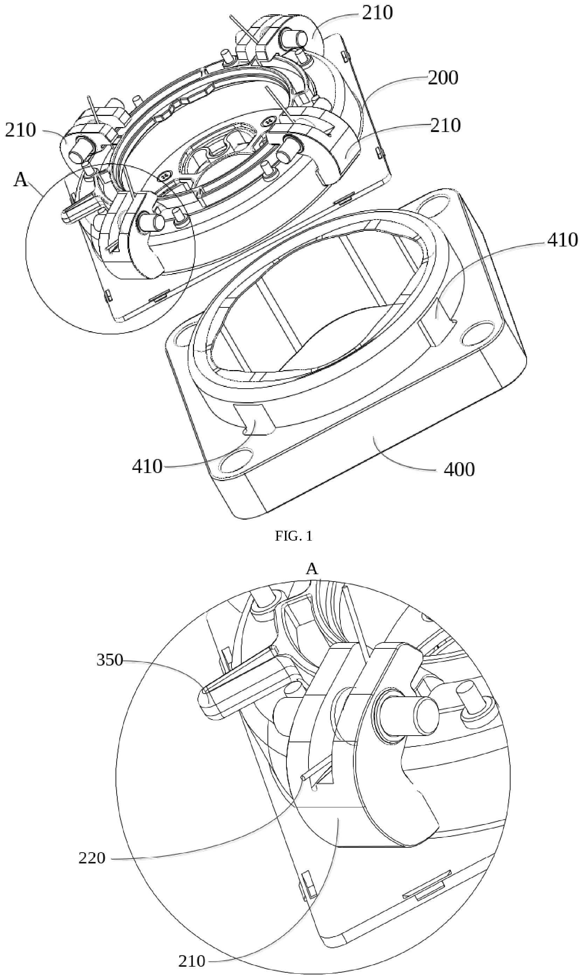

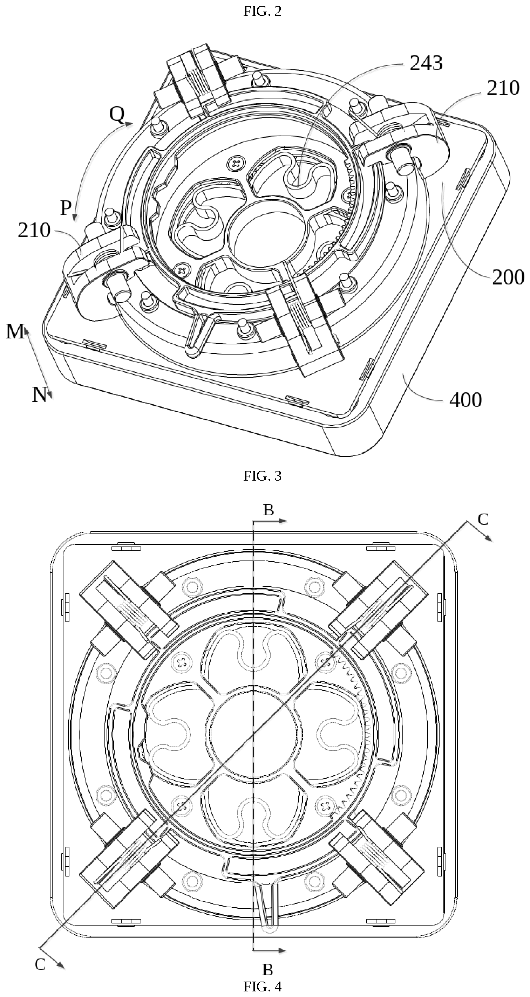

In some embodiments, referring to FIGS. 1-6, the base 400 may include a first limiting portion, and the connecting structure 200 may include a second limiting portion. The base 400 may be coupled to or connected to the connecting structure 200 in a first direction (for example, the first direction can be a MN direction in FIG. 3), and the first limiting portion and the second limiting portion may be locked along the first direction to lock the base 400 and the connecting structure 200. When it is necessary to unlock/release the base 400 from the connecting structure 200, the connecting structure 200 may be movable relative to the base 400 along a second direction to unlock the first limiting portion from the second limiting portion. In this way, the base 400 can be decoupled from the connecting structure 200 in the first direction, thereby enabling quick disassembly of the base 400 and the connecting structure 200.

Through the embodiment, when it is necessary to unlock the base 400 from the connecting structure 200, unlocking can be achieved by making the base 400 and the connecting structure 200 be movable relative to each other. The unlocking operation is convenient, the disassembly efficiency is high, which may facilitate quick disassembly of the base 400 and the connecting structure 200.

Specifically, in some embodiments, the base 400 may be fixed to a fixed surface, such as a wall or a surface of another device. The connecting structure 200 may be fixedly connected to a device to be fixed, such as the output device, etc. For example, the connecting structure 200 may be fixed to the fixed device via a fixing member such as a bolt, or a screw, etc.

In an embodiment, the base 400 is coupled to the connecting structure 200 in the first direction, and the first limiting portion is locked with the second limiting portion in the first direction, so that the device to be fixed can be fixed to the fixed surface.

In an embodiment, when the device to be fixed needs to be removed, the connecting structure 200 is configured as a movable structure, so that the connecting structure 200 can be moved relative to the base 400 along the second direction, thereby enabling the first limiting portion and the second limiting portion to disengage/unlock from each other in the first direction. Thus, the device to be fixed can be removed along the first direction.

Alternatively, in some other embodiments, the difference from the above embodiments is that the connecting structure 200 can be fixed to the fixed surface, and a first device can be fixedly connected to the device to be fixed. In this way, beneficial effect of quick connection and quick disconnection between the base 400 and the connecting structure 200 can be achieved, and the details are not described in detail here.

In some embodiments, the connecting structure 200 includes at least two electrical contacts located at different positions, and the electrical contacts are connected to a short-circuit detection apparatus. Preferably, there are four electrical contacts, which are respectively located at the four corners of the connecting structure 200.

When the connecting structure 200 is in correct contact with the base 400, a short circuit will be formed between the electrical contacts, thereby triggering the short-circuit detection apparatus. When the connecting structure 200 is in poor contact with the base 400, the electrical contacts will not form a short circuit, and the short-circuit detection apparatus cannot detect a short-circuit signal. This indicates poor contact and a signal is sent to a controller, which can further trigger an alarm. There are at least two electrical contacts located at different positions, and the at least two electrical contacts can also be arranged in pairs at each of the different positions. For example, four electrical contacts can be arranged and respectively arranged at four corners of the connecting structure 200. When the four electrical contacts at the four corners are all electrically short-circuited with other batteries 610 and send the short-circuit signal, it indicates good contact at this time. When at least one of the electrical contacts cannot send the short-circuit signal, it indicates poor contact at this time. For example, the electrical contacts can also be arranged in four pairs at the four corners of the connecting structure 200.

The following describes possible movement modes when the base 400 is unlocked from the connecting structure 200.

In some embodiments, as shown in FIG. 3, when unlocking the connecting structure 200 from the base 400, the connecting structure 200 may be rotated relative to the base 400 (for example, the connecting structure 200 may rotate along a PQ direction in FIG. 3). For example, when unlocking is required, the connecting structure 200 can be rotated relative to the base 400. During the rotation, the first limiting portion and the second limiting portion are unlocked in the first direction, thereby achieving unlocking between the base 400 and the connecting structure 200 in the first direction, so as to facilitate separation of the base 400 and the connecting structure 200 and achieve disassembly.

More specifically, for example, the base 400 can be plugged into/inserted into the connecting structure 200 in the first direction. For example, the base 400 can be at least partially embedded in the connecting structure 200 along the first direction, and the first limiting portion is engaged with the second limiting portion in the first direction, such that the locking between the base 400 and the connecting structure 200 is achieved. Alternatively, the connecting structure 200 may be at least partially embedded into the base 400 along the first direction, and the first limiting portion is engaged with the second limiting portion in the first direction, such that the locking between the base 400 and the connecting structure 200 is achieved.

In some other embodiments, when unlocking the connecting structure 200 from the base 400, the connecting structure 200 may be slidable relative to the base 400. For example, when unlocking is required, the connecting structure 200 may be slidable relative to the base 400. During a sliding process, the first limiting portion and the second limiting portion are unlocked in the first direction, so as to facilitate separation of the base 400 from the connecting structure 200, which may achieve disassembly.

The above is an exemplary illustration of movement modes when the base 400 and the connecting structure 200 are unlocked, and the embodiments of the present disclosure are not limited thereto.

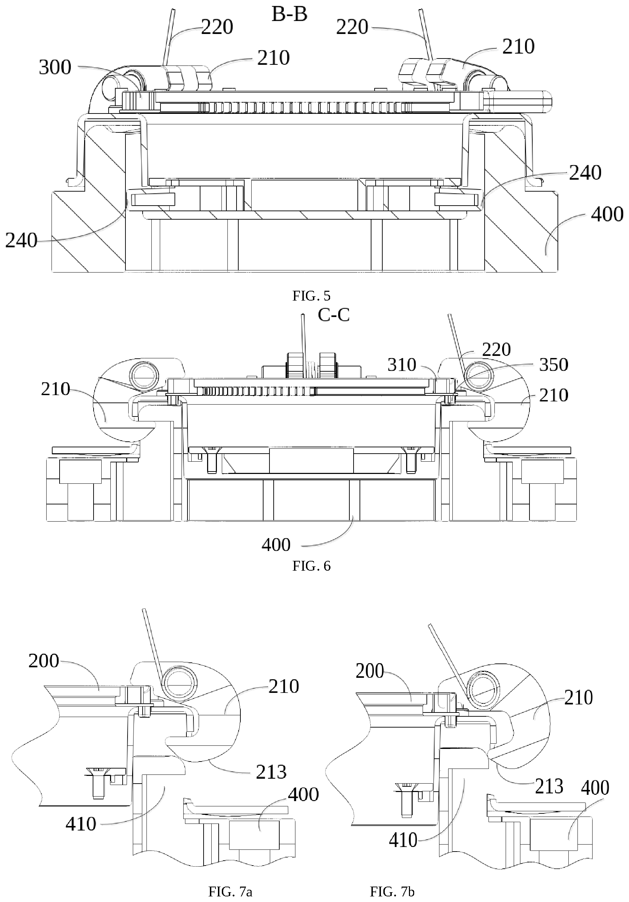

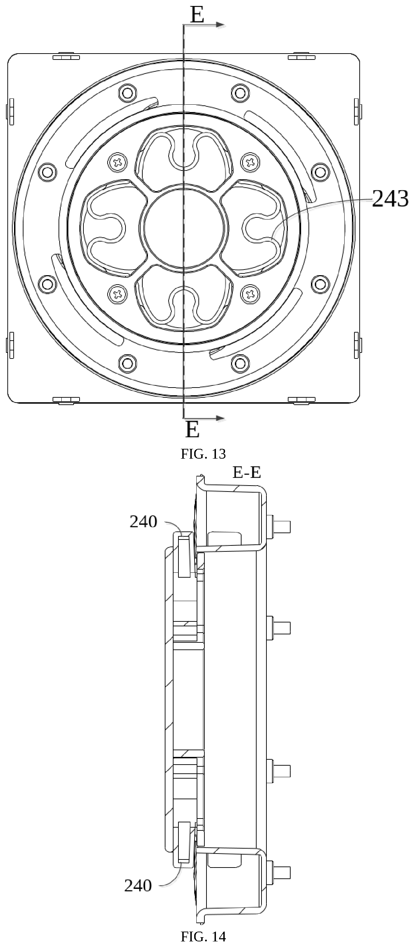

In some embodiments, referring to FIGS. 6-21, the first limiting portion may include a first limiting groove 410, and the second limiting portion may include an engaging member or a clamping member 210 movably disposed on the connecting structure 200. The engaging member 210 is inserted into/engaged with the first limiting groove 410 to lock the base 400 and the connecting structure 200 in the first direction. In the embodiment, the engaging member 210 is inserted into the first limiting groove 410 and is engaged with the first limiting groove 410 in the first direction, so that the base 400 and the connecting structure 200 are locked with each other in the first direction.

The following is an exemplary illustration of possible movement modes of the engaging member 210 on the connecting structure 200.

In some embodiments, the engaging member 210 may be rotatably disposed on the connecting structure 200. Referring to FIG. 4, and FIGS. 6-8, a rotation shaft 202 may be provided on the connecting structure 200, and the rotation shaft 202 passes through the engaging member 210. The engaging member 210 can rotate around the rotation shaft 202 , such that the engaging member 210 may be rotatably disposed on the connecting structure 200.

In some embodiments, as shown in FIG. 1, FIG. 5 and FIG. 7, an insertion groove 203 may be defined on the connecting structure 200. An opening 201 may be defined in a sidewall of the insertion groove 203. The engaging member 210 may be rotatable about the rotation shaft 202 located outside the insertion groove 203. A distal end of the engaging member 210 may be extended into the insertion groove 203 through the opening 201. The engaging member 210 may be configured to be engaged into a first limiting groove 410 defined on a peripheral wall of the base 400 after the base 400 may be inserted into the insertion groove 203 along a first direction, and the base 400 and the connecting structure 200 are locked with each other in the first direction. A first guiding slope 211 may be provided on an outer sidewall of the engaging member 210. When the connecting structure 200 rotates relative to the base 400 along a peripheral direction of the insertion groove 203, a contact position between the first guiding slope 211 and an inner sidewall of the first limiting groove 410 gradually moves toward the distal end of the engaging member 210 until the distal end of the engaging member 210 may be unlocked from the first limiting groove 410, and the base 400 and the connecting structure 200 are unlocked from each other in the first direction.

In some embodiments, the insertion groove 203 may be annular. The connecting structure 200 includes an outer component 214 and an inner component 215. The insertion groove 203 may be defined by the inner component 215 and the outer component 214. The guiding protrusion may be disposed in the inner component 215 and partially exposed into the insertion groove 203 from the inner component 215.

In other embodiments, the engaging member 210 may be slidably disposed on the connecting structure 200. For example, a sliding groove may be defined on the connecting structure 200, and the engaging member 210 may cooperate with the sliding groove, such that the engaging member 210 may be slidably disposed on the connecting structure 200.

The above is an exemplary illustration of movement modes of the engaging member 210 on the connecting structure 200. It is understood that the engaging member 210 may also be other movement forms on the connecting structure 200, such as pivoting via a connecting rod, etc., and the present disclosure is not limited thereto.

In some embodiments, referring to FIGS. 2-6, the connecting structure 200 further includes a force-applying member 220 connected to the engaging member 210. The force-applying member 220 is configured to bias the engaging member 210 toward the first limiting groove 410, such that it may keep the engaging member 210 engaged with the first limiting groove 410.

In an embodiment, the force-applying member 220 can enable the engaging member 210 to maintain a tendency to move into the first limiting groove 410, thereby enabling the engaging member 210 to keep engaged with the first limiting groove 410, so as to improve the stability of the engagement between the engaging member 210 and the first limiting groove 410, which may further improve the stability of the base 400 and the connecting structure 200 being locked with each other in the first direction.

For example, when the engaging member 210 is rotatably disposed on the connecting structure 200, the force-applying member 220 may be a torsion spring. The torsion spring may be disposed around a rotation shaft 202 of the engaging member 210. Both ends of the torsion spring abut against the engaging member 210 and the connecting structure 200 respectively. The torsion spring enables the engaging member 210 to maintain a rotational tendency to rotate into the first limiting groove 410 and insert into the first limiting groove 410, such that it may keep the engaging member 210 engaged with the first limiting groove 410.

For another example, when the engaging member 210 is slidably disposed on the connecting structure 200, the force-applying member 220 may be a compression spring. Both ends of the compression spring abut against the engaging member 210 and the connecting structure 200 respectively. The spring enables the engaging member 210 to maintain a tendency to extend toward a side of the first limiting groove 410, such that it may keep the engaging member 210 engaged with the first limiting groove 410.

For another example, the force-applying member 220 may also be a first permanent magnet. A second permanent magnet cooperating with the first permanent magnet may be provided on the connecting structure 200 or the base 400. The first permanent magnet, for example, may be fixed on the engaging member 210. Through the interaction (such as attraction or repulsion) between the first permanent magnet and the second permanent magnet, the engaging member 210 is maintained with a tendency to move into the first limiting groove 410.

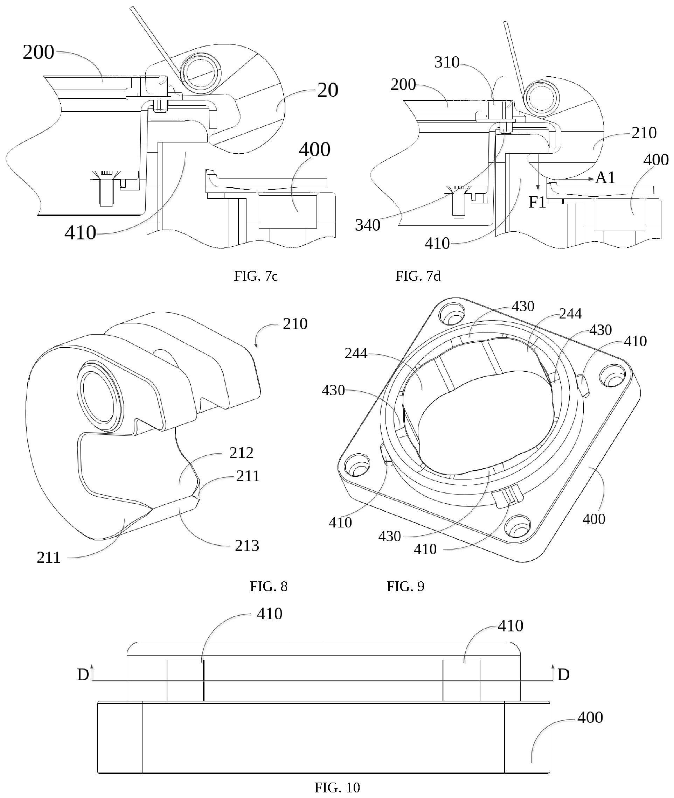

In some embodiments, referring to FIG. 8, a first guiding slope 211 is formed on an outer sidewall of the engaging member 210. A height of the first guiding slope 211 in the second direction gradually changes. When the connecting structure 200 moves relative to the base 400 along the second direction, the first guiding slope 211 can abut against the first limiting groove 410, and guide the engaging member 210 to disengage from the first limiting groove 410.

Referring to FIG. 8, the height of the first guiding slope 211 in the second direction gradually changes. For example, from a distal end of the engaging member 210 away from the connecting structure 200 to a proximal end of the engaging member 210 connected to the connecting structure 200, the height of the first guiding slope 211 in the second direction gradually increases. In other words, from the distal end of the engaging member 210 to the proximal end of the engaging member 210, the first guiding slope 211 gradually extends outward of the engaging member 210 in the second direction. Thus, when the connecting structure 200 moves relative to the base 400 in the second direction, a side of the first guiding slope 211 close to the proximal end of the engaging member 210 first abuts against a sidewall of the first limiting groove 410. Under guidance of the first guiding slope 211, the engaging member 210 gradually moves out of the first limiting groove 410, a contact position where the first guiding slope 211 contacts the first limiting groove 410 also gradually moves toward the distal end of the engaging member 210 until the distal end of the engaging member 210 disengages from the first limiting groove 410, and the engaging member 210 and the first limiting groove 410 are unlocked in the first direction.

Further, in some embodiments, referring to FIG. 8, first guiding slopes 211 are respectively formed on two opposite outer sidewalls of the engaging member 210 in the second direction. From the proximal end of the engaging member 210 connected to the connecting structure 200 to the distal end of the engaging member 210 away from the connecting structure 200, a distance between the two first guiding slopes 211 in the second direction gradually decreases.

In the embodiment, the first guiding slopes 211 are respectively formed on two opposite sidewalls of the engaging member 210 in the second direction. From the proximal end of the engaging member 210 to the distal end of the engaging member 210, the distance between the two first guiding slopes 211 in the second direction gradually decreases. Thus, on one hand, any one of the first guiding slopes 211 can guide the engaging member 210 to unlock from the first limiting groove 410, and the connecting structure 200 can be unlocked by moving along any direction in the second direction relative to the base 400, which may improve freedom of unlocking. On the other hand, a width of the distal end of the engaging member 210 in the second direction is also reduced, which may facilitate the distal end of the engaging member 210 to smoothly insert into the first limiting groove 410, and make alignment easier during installation of the base 400 and the connecting structure 200.

In some embodiments, referring to FIGS. 9-11, a second guiding slope 420 is formed on an inner sidewall of the first limiting groove 410. A height of the second guiding slope 420 in the second direction gradually changes. When the connecting structure 200 moves relative to the base 400 along the second direction, the second guiding slope 420 can abut against the engaging member 210, and guide the engaging member 210 to disengage from the first limiting groove 410.

The height of the second guiding slope 420 in the second direction gradually changes. For example, from an outer opening of the first limiting groove 410 to an inside of the first limiting groove 410, the height of the second guiding slope 420 in the second direction gradually increases. In other words, from the outer opening of the first limiting groove 410 to the inside of the first limiting groove 410, the second guiding slope 420 gradually extends into the first limiting groove 410 in the second direction. Thus, when the connecting structure 200 moves relative to the base 400 in the second direction, the engaging member 210 first abuts against a side of the second guiding slope 420 located inside the first limiting groove 410. Under guidance of the second guiding slope 420, the engaging member 210 gradually moves out of the first limiting groove 410 until the engaging member 210 passes over a side of the second guiding slope 420 close to the outer opening of the first limiting groove 410, and the engaging member 210 moves out of the first limiting groove 410. The engaging member 210 disengages from the first limiting groove 410, and the base 400 and the connecting structure 200 are unlocked in the first direction.

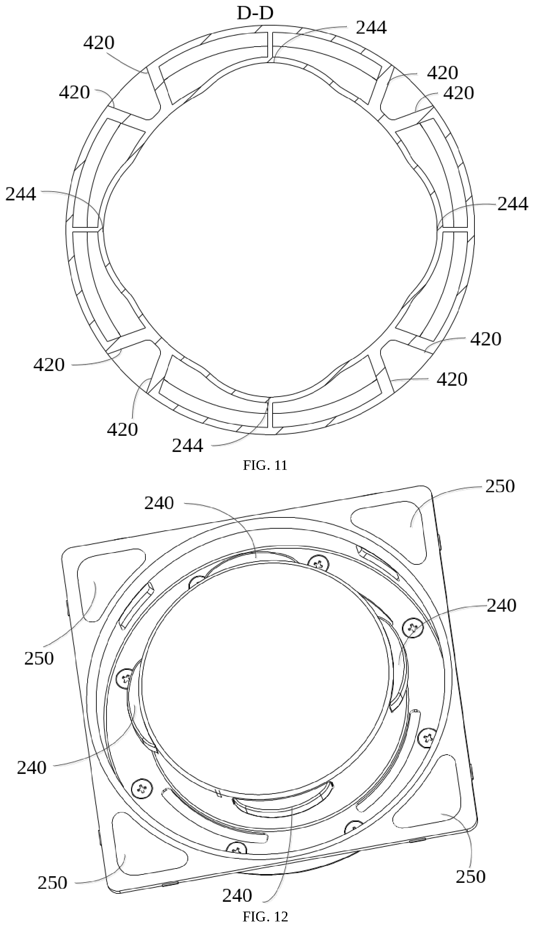

Further, in some embodiments, referring to FIG. 11, the second guiding slopes 420 are respectively formed on two opposite inner sidewalls of the first limiting groove 410 in the second direction. From the outer opening of the first limiting groove 410 to the inside of the first limiting groove 410, a distance between the two second guiding slopes 420 in the second direction gradually decreases.

In the embodiment, on one hand, any one of the second guiding slopes 420 can guide the engaging member 210 to unlock from the first limiting groove 410, and the connecting structure 200 can be unlocked by moving along any direction in the second direction relative to the base 400, which may improve freedom of unlocking. On the other hand, a width of the opening of the first limiting groove 410 in the second direction is also increased, which may facilitate the engaging member 210 to more easily engage with the limiting groove, and make alignment easier during installation of the base 400 and the connecting structure 200.

In some embodiments, referring to FIG. 7 and FIG. 8, an engaging surface 212 and a third guiding slope 213 are respectively arranged on the two opposite outer sidewalls of the engaging member 210 in the first direction. When the engaging member 210 is engaged with the first limiting groove 410, the engaging surface 212 contacts and is engaged with the first limiting groove 410 in the first direction. A height of the third guiding slope 213 in the first direction gradually changes.

In the embodiment, the engaging surface 212 of the engaging member 210 abuts against the first limiting groove 410, such that the engaging member 210 may be engaged with the first limiting groove 410. During a coupling process of the base 400 and the connecting structure 200 in the first direction, the third guiding slope 213 first contacts a plane around the first limiting groove 410 on the connecting structure 200. Since the height of the third guiding slope 213 gradually changes in the first direction, during the coupling process of the connecting structure 200 relative to the base 400 in the first direction, the third guiding slope 213 can guide the movement of the engaging member 210, which may enable the engaging member 210 to smoothly pass over an edge of the opening of the first limiting groove 410, and then the engaging surface 212 can be engaged with the first limiting groove 410.

For example, when the engaging member 210 is rotatably connected to the connecting structure 200, referring to FIG. 7(a), the third guiding slope 213 abuts against an outer sidewall of the first limiting groove 410 on the base 400. Then, referring to FIG. 7(b), the third guiding slope 213 can guide the engaging member 210 to rotate outward of the first limiting groove 410, referring to FIG. 7(c), until the engaging member 210 passes over the edge of the opening of the first limiting groove 410, the engaging member 210 rotates into the first limiting groove 410, referring to FIG. 7(d), the engaging surface 212 of the engaging member 210 is engaged with the first limiting groove 410, so that the engaging member 210 is engaged with the first limiting groove 410 in the first direction.

For another example, when the engaging member 210 is slidably connected to the connecting structure 200, the third guiding slope 213 can guide the engaging member 210 to slide toward a side away from the first limiting groove 410 until the engaging member 210 passes over the edge of the opening of the first limiting groove 410. The engaging member 210 slides into the first limiting groove 410, and the engaging surface 212 of the engaging member 210 is engaged with the first limiting groove 410, so that the engaging member 210 is engaged with the first limiting groove 410 in the first direction.

In some embodiments, when the engaging member 210 is engaged with the first limiting groove 410, a force exerted by the first limiting groove 410 on the engaging member 210 is substantially perpendicular to a movement direction of the engaging member 210 when the engaging member 210 is unlocked from the first limiting groove 410.

In the embodiment, when the engaging member 210 is engaged with the first limiting groove 410, the force exerted by the first limiting groove 410 on the engaging member 210 is substantially perpendicular to the movement direction of the engaging member 210 when unlocking from the first limiting groove 410. Thus, the engaging member 210 can be self-locked, which may reduce accidental unlocking between the engaging member 210 and the first limiting groove 410, and improve the reliability of fixation between the base 400 and the connecting structure 200.

For example, when the engaging member 210 is rotatably disposed on the connecting structure 200, referring to FIG. 7(d), the movement direction of the engaging member 210 when unlocking from the first limiting groove 410 is a tangential direction of rotation of the engaging member 210 in a state shown in FIG. 7(d) (for example, a direction A1 in FIG. 7(d)). The force exerted by the first limiting groove 410 on the engaging member 210 is as shown in FIG. 7(d) (for example, a direction F1 in FIG. 7(d)), and a direction of the force is substantially perpendicular to the movement direction of the engaging member 210 when unlocking, thereby enabling the engaging member 210 to be self-locked in a current position.

For another example, when the engaging member 210 is slidably disposed on the connecting structure 200, the force exerted by the first limiting groove 410 on the engaging member 210 is substantially perpendicular to a sliding direction of the engaging member 210, which can also achieve self-locking and, which may help reduce the possibility of accidental unlocking between the engaging member 210 and the first limiting groove 410.

In some embodiments, referring to FIGS. 5-7 and FIGS. 18-21, the output device may further include a locking member 300, and the locking member 300 is movably disposed on the connecting structure 200. When the engaging member 210 is locked with the first limiting groove 410, the locking member 300 may be movable relative to the connecting structure 200 and abut against the engaging member 210, which may limit the movement of the engaging member 210.

In the embodiment, the locking member 300 is configured to limit the movement of the engaging member 210 when the engaging member 210 is locked with the first limiting groove 410, thereby maintaining a locked state between the engaging member 210 and the first limiting groove 410, which may help reduce accidental unlocking between the engaging member 210 and the first limiting groove 410, so that the reliability of locking between the base 400 and the connecting structure 200 is relatively higher. When a device (e.g., the output device) is fixed via the base 400 and the connecting structure 200, the fixed device can withstand greater loads in different directions, which may improve safety of the fixed device during operation.

In some embodiments, the locking member 300 includes a first position that allows the engaging member 210 to move freely, and a second position that restricts/limits the movement of the engaging member 210. The locking member 300 can move between the first position and the second position.

In the embodiment, when the locking member 300 moves to the first position, the engaging member 210 can move freely. In other words, the engaging member 210 has freedom of movement required for unlocking from the first limiting groove 410. Thus, when the locking member 300 is located at the first position, the engaging member 210 can be moved and unlocked from the first limiting groove 410, which may enable disassembly of the base 400 and connecting structure 200. After the engaging member 210 is locked with the first limiting groove 410, when the locking member 300 moves to the second position, the locking member 300 abuts against the engaging member 210, and the locking member 300 limits the movement of the engaging member 210. At this time, the engaging member 210 cannot be unlocked from the first limiting groove 410, and the reliability of the locking between the base 400 and the connecting structure 200 is relatively higher.

In a possible embodiment, the first position may correspond to a position interval or a position range. In other words, there may be a plurality of first positions. When the locking member 300 moves to the position interval corresponding to the first position, the locking member 300 may have the freedom of movement required for unlocking from the first limiting groove 410.

In an embodiment, the locking member 300 may be slidably disposed on the connecting structure 200. For example, a sliding groove configured to accommodate the locking member 300 may be defined on the connecting structure 200. The locking member 300 is embedded in the sliding groove and can be slidable along the sliding groove to the first position and the second position, respectively. Alternatively, the sliding groove is defined on one of the locking member 300 and the connecting structure 200, and a sliding block configured to cooperate with or match the sliding groove is provided on the other of the locking member 300 and the connecting structure 200, so that the locking member 300 is slidably disposed on the connecting structure 200. With the cooperation of the sliding groove and the sliding block, the locking member 300 can slide to the first position and the second position, respectively.

In another embodiment, the locking member 300 may be rotatably disposed on the connecting structure 200, and the locking member 300 may be rotated on the connecting structure 200 to the first position and the second position, respectively.

In some embodiments, referring to FIGS. 5-7, the locking member 300 is movably disposed on the connecting structure 200, and the locking member 300 includes a limiting protrusion 310 and a clearance slot 320. When the locking member 300 moves to the second position, the limiting protrusion 310 abuts against the engaging member 210 to limit the movement of the engaging member 210. When the locking member 300 moves to the first position, the clearance slot 320 overlaps with the engaging member 210, so that the engaging member 210 has the freedom of movement for unlocking from the first limiting groove 410.

In the embodiment, when the locking member 300 moves to the second position, the limiting protrusion 310 abuts against the engaging member 210 to limit the movement of the engaging member 210, which may reduce the possibility of accidental unlocking between the engaging member 210 and the limiting protrusion 310. When the locking member 300 moves to the first position, the clearance slot 320 provides clearance for the movement of the engaging member 210, so that the engaging member 210 has the freedom of movement for unlocking from the first limiting groove 410.

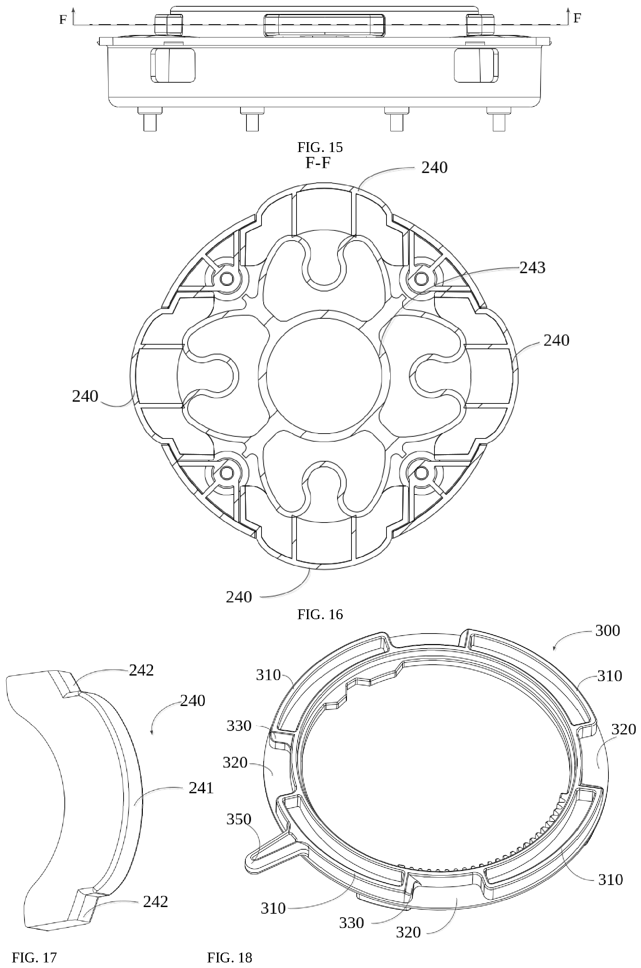

In a possible embodiment, referring to FIG. 18, the clearance slot 320 may be formed by a surface of the locking member 300 being recessed downward, and a depth of the clearance slot 320 is less than a thickness of the locking member 300. The engaging member 210 can move (for example, rotate) into the clearance slot 320 and disengage from the first limiting groove 410 in the first direction, so that the engaging member 210 is unlocked from the first limiting groove 410.

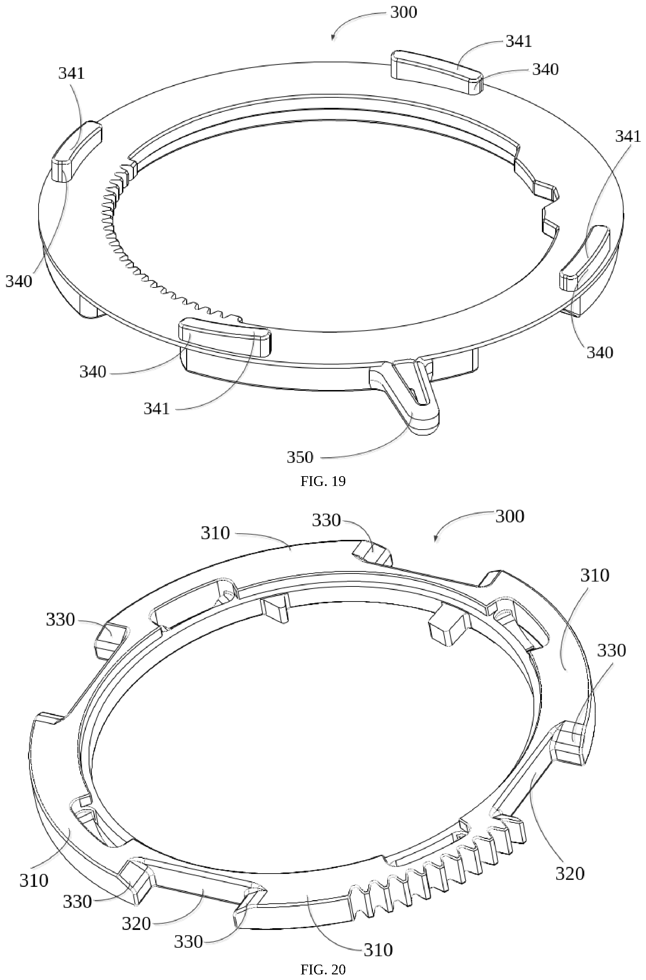

In another possible embodiment, referring to FIG. 20, the clearance slot 320 may also be a through groove defined on the locking member 300. The engaging member 210 can move (e.g., rotate) in the clearance slot 320 to unlock from the first limiting groove 410.

In some embodiments, referring to FIGS. 18-20, the locking member 300 further includes a fourth guiding slope 330, and the fourth guiding slope 330 is connected to the adjacent limiting protrusion 310 and the clearance slot 320. The fourth guiding slope 330 gradually increases in height from the clearance slot 320 to the limiting protrusion 310.

In the embodiment, after the engaging member 210 is engaged with the first limiting groove 410 in the first direction, the locking member 300 can move from the first position to the second position. During the movement of the locking member 300, the fourth guiding slope 330 can contact the engaging member 210, thereby guiding the engaging member 210 to abut against the limiting protrusion 310, which may limit the movement of the engaging member 210.

In some embodiments, referring to FIGS. 1-7 and FIGS. 18-20, there are a plurality of engaging members 210, and the plurality of engaging members 210 are arranged at intervals along a peripheral direction of the connecting structure 200. The locking member 300 is annular, and the locking member 300 includes a plurality of sets of limiting protrusions 310 and clearance slots 320 corresponding to the engaging members 210. The locking member 300 can rotate relative to the connecting structure 200 and rotate to the first position or the second position. A center of the locking member 300 is coincident with a rotation axis of the locking member 300.

In the embodiment, the locking member 300 rotates around the center of the locking member 300. When the locking member 300 is located at the first position, the clearance slot 320 on the locking member 300 overlaps with a corresponding one of the engaging members 210, and the corresponding one of the engaging members 210 can move and be engaged with the first limiting groove 410. After the engaging member 210 is engaged with the first limiting groove 410, the locking member 300 can be rotated from the first position to the second position. After the locking member 300 is rotated to the second position, the limiting protrusion 310 of the locking member 300 abuts against the corresponding one of the engaging members 210, and the movement of the engaging member 210 is limited. Thus, the plurality of engaging members 210 can be locked simultaneously through rotation of the locking member 300, which may improve operational efficiency.

In some embodiments, the output device further includes a first driving motor 360, which is fixed on the connecting structure 200 and is drivingly connected to the locking member 300. The first driving motor 360 is configured to drive the locking member 300 to move.

For example, when the locking member 300 is rotatably or slidably disposed on the connecting structure 200, an output shaft of the first driving motor 360 may be in driving connection with the locking member 300 via a rack-and-pinion mechanism. Alternatively, when the locking member 300 is slidably disposed on the connecting structure 200, the first driving motor 360 may be in driving connection with the locking member 300 via a screw feed mechanism.

In a possible embodiment, the first driving motor 360 is configured to drive the locking member 300 to move in response to a first in-position signal transmitted/sent by a first position detection apparatus, so that the locking member 300 abuts against the engaging member 210. The first in-position signal is configured to indicate that the connecting structure 200 is coupled to the base 400. For example, a controller of the first driving motor 360 may be communicatively connected to the first position detection apparatus, and the controller of the first driving motor 360 may control the first driving motor 360 to operate according to the first in-position signal transmitted by the first position detection apparatus.

In the embodiment, the first position detection apparatus detects whether the base 400 is coupled to the connecting structure 200. It can be understood that when the base 400 is coupled to the connecting structure 200, the base 400 and the connecting structure 200 are mounted in place. The first driving motor 360 may drive the locking member 300 to move in response to the first in-position signal transmitted by the first position detection apparatus, such as driving the locking member 300 to move from the first position to the second position, so as to achieve the locking of the engaging member 210.

For example, the first position detection apparatus may be a Hall sensor, and a permanent magnet cooperating with the Hall sensor may be provided. One of the Hall sensor and the permanent magnet is disposed on the base 400, and the other of the Hall sensor and the permanent magnet is disposed on the connecting structure 200. After the base 400 and the connecting structure 200 are coupled in place, a magnetic field of the permanent magnet triggers the Hall sensor, and the controller of the first driving motor 360 controls the first driving motor 360 to start operating in response to the first in-position signal triggered or actuated by the Hall sensor, and the first driving motor 360 drives the locking member 300 to move.

Alternatively, the first position detection apparatus may be a reed switch. Similarly, the reed switch may be configured in a similar manner to the Hall sensor. The cooperation between the reed switch and the permanent magnet may be configured to detect whether the base 400 and the connecting structure 200 are coupled in place, which can be achieved by referring to the foregoing embodiments, and will not be described in detail here.

For another example, the first position detection apparatus may be a limit switch, which may be individually disposed on the base 400 or individually disposed on the connecting structure 200. After the base 400 and the connecting structure 200 are coupled in place, the limit switch is triggered, and the controller of the first driving motor 360 controls the first driving motor 360 to start operating in response to the triggering of the limit switch, and the first driving motor 360 drives the locking member 300 to move. In another alternative embodiment, limit switches may be respectively disposed on the base 400 and the connecting structure 200, and the controller of the first driving motor 360 may be configured to control the first driving motor 360 to start operating when both the limit switch on the base 400 and the limit switch on the connecting structure 200 are triggered, so as to reduce the possibility of false triggering of the first driving motor 360.

In another alternative embodiment, the first in-position signal is configured to indicate that the engaging member 210 is engaged with the first limiting groove 410.

In the embodiment, when the engaging member 210 is engaged with the first limiting groove 410, the first position detection apparatus transmits the first in-position signal, and the first driving motor 360 drives the locking member 300 to move in response to the first in-position signal, such as driving the locking member 300 to move from the first position to the second position, so as to achieve the locking of the engaging member 210.

For example, the first position detection apparatus may be the Hall sensor, and the permanent magnet cooperating with the Hall sensor may be provided. One of the Hall sensor and the permanent magnet is disposed on the engaging member 210, and the other of the Hall sensor and the permanent magnet is disposed on the base 400 or the connecting structure 200. After the engaging member 210 is engaged with the first limiting groove 410, the magnetic field of the permanent magnet triggers the Hall sensor, and the controller of the first driving motor 360 controls the first driving motor 360 to start operating in response to the first in-position signal triggered by the Hall sensor, and the first driving motor 360 drives the locking member 300 to move.

Alternatively, the first position detection apparatus may be the reed switch. Similarly, the reed switch may be configured in a similar manner to the Hall sensor. The cooperation between the reed switch and the permanent magnet may be configured to detect whether the engaging member 210 is engaged with the first limiting groove 410, which can be achieved by referring to the foregoing embodiments, and will not be described in detail here.

For another example, the first position detection apparatus may be the limit switch, which may be individually disposed on the base 400 or individually disposed on the connecting structure 200. After the engaging member 210 is engaged with the first limiting groove 410, the limit switch is triggered (for example, which is triggered by the engaging member 210), and the controller of the first driving motor 360 controls the first driving motor 360 to start operating in response to the triggering of the limit switch, and the first driving motor 360 drives the locking member 300 to move. In another alternative embodiment, limit switches may be respectively disposed on the base 400 and the connecting structure 200, and the controller of the first driving motor 360 may be configured to control the first driving motor 360 to start operating when both the limit switch on the base 400 and the limit switch on the connecting structure 200 are triggered, so as to reduce the possibility of false triggering of the first driving motor 360.

In some embodiments, the output device further includes a second position detection apparatus, which is communicatively connected to the first driving motor 360. The second position detection apparatus is configured to detect a current position of the locking member 300 and generate a second in-position signal when the locking member 300 moves to a preset limit position. The second in-position signal is configured to stop the first driving motor 360 that is in motion.

For example, the second position detection apparatus may be communicatively connected to the controller of the first driving motor 360, the second in-position signal transmitted by the second position detection apparatus may be sent to the controller of the first driving motor 360, and the controller of the first driving motor 360 controls the first driving motor 360 in motion to stop.

In the embodiment, the second in-position signal indicates that the locking member 300 moves to the preset limit position, and the first driving motor 360 stops operating in response to the second in-position signal, so as to achieve precise control of the first driving motor 360.

In a possible embodiment, the second position detection apparatus may be the limit switch disposed on the connecting structure 200. When the locking member 300 moves to the preset limit position, the locking member 300 triggers the limit switch.

In another possible embodiment, the second position detection apparatus may also be a photoelectric gate. When the locking member 300 moves to the preset limit position, the photoelectric gate is triggered.

In another possible embodiment, the second position detection apparatus may be a Hall element, and a permanent magnet cooperating with the Hall element may be provided. For example, the Hall element may be disposed on the connecting structure 200. For example, the permanent magnet is disposed on the locking member 300. When the locking member 300 moves to the preset limit position, the Hall element is triggered.

In another possible embodiment, the second position detection apparatus may be the reed switch, which is configured similarly to the Hall element, and will not be described in detail here.

In some embodiments, the locking member 300 is further connected to a toggle handle 350, and the toggle handle 350 extends from the connecting structure 200.

In the embodiment, the toggle handle 350 extends from the connecting structure 200, and the movement of the locking member 300 can be manually controlled by the toggle handle 350. For example, a strip groove configured to limit the movement range of the toggle handle 350 may be provided on the connecting structure 200, and the toggle handle 350 moves in the strip groove, so that the locking member 300 can move to the first position and the second position respectively.

In some embodiments, referring to FIG. 6, FIG. 7, FIG. 19 and FIG. 21, the locking member 300 includes a first top block 340. When the locking member 300 moves to the second position, the first top block 340 abuts against the base 400 in the first direction.

First, the possible application background of an embodiment is described. When the first limiting portion and the second limiting portion are locked with each other, the base 400 and the connecting structure 200 can be locked with each other. However, due to factors such as processing errors and assembly errors, etc., after the base 400 and the connecting structure 200 are locked with each other, there may be a certain gap between the base 400 and the connecting structure 200, causing the base 400 and the connecting structure 200 to shake relative to each other, and affecting the stability and the reliability of the connection. For example, when the base 400 is fixed on the fixed surface and the connecting structure 200 is connected to the output device, during use of the output device, the connecting structure 200 will shake relative to the base 400, resulting in affecting the stability of the connection and also aggravating the wear of the base 400 and the connecting structure 200.

In an embodiment, by providing the first top block 340, the base 400 and the connecting structure 200 can be abutted against each other, thereby reducing the gaps caused by the processing errors, the assembly errors, etc., and improving the reliability of the connection between the base 400 and the connecting structure 200.

Specifically, in an embodiment, the first top block 340 is provided on the locking member 300. When the locking member 300 moves to the second position, the locking member 300 abuts against the engaging member 210 and limits the movement of the engaging member 210, so that the engagement between the engaging member 210 and the first limiting groove 410 is more reliable. At the same time, the first top block 340 abuts against the base 400 in the first direction, and the first top block 340 can fill the gap between the base 400 and the connecting structure 200, so that the base 400 and the connecting structure 200 are locked with each other as a whole, which may reduce the possibility of shaking of the base 400 and the connecting structure 200. It should also be noted that by providing the first top block 340 on the locking member 300, reuse of a driving assembly can be achieved. That is, by driving the locking member 300, the locking of the engaging member 210 can be achieved, and the first top block 340 can be driven to abut against the connecting structure 200, which is convenient for simplifying structure and improving reliability.

In some embodiments, referring to FIG. 9, a fifth guiding slope 430 is provided on a side of the base 400 facing the connecting structure 200. Along a moving direction of the locking member 300, a height of the fifth guiding slope 430 in the first direction gradually changes. When the locking member 300 moves to the second position, the first top block 340 abuts against the fifth guiding slope 430.

In the embodiment, the height of the fifth guiding slope 430 in the first direction gradually changes. During the movement of the locking member 300, for example, the height of the fifth guiding slope 430 in the first direction gradually increases. In other words, during the movement of the locking member 300 toward the second position, a distance between the first top block 340 and the fifth guiding slope 430 gradually decreases. When the locking member 300 moves to the second position, or before the locking member 300 moves to the second position, the first top block 340 abuts against the fifth guiding slope 430. When the locking member 300 is fixed in the second position, the locking member 300 and the fifth guiding slope 430 are in a state of abutting against each other.

In one possible embodiment, before the locking member 300 moves to the second position, the first top block 340 abuts against the fifth guiding slope 430, and then, as the locking member 300 continues to move to the second position, under guiding action of the fifth guiding slope 430, the gap between the base 400 and the connecting structure 200 gradually decreases until the locking member 300 has moved to the second position. At this time, the gap between the base 400 and the connecting structure 200 is eliminated through interaction between the first top block 340 and the fifth guiding slope 430.

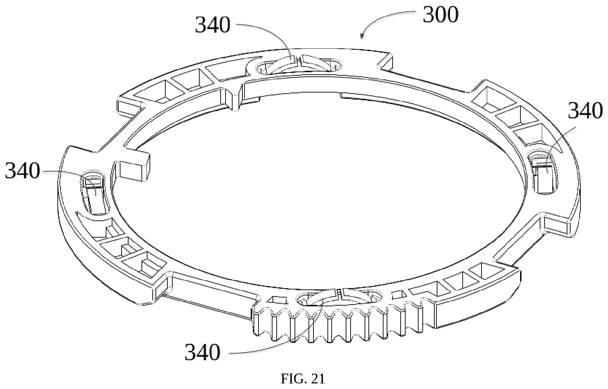

In some embodiments, referring to FIG. 19 and FIG. 21, a sixth guiding slope 341 is provided at an end of the first top block 340 abutting against the fifth guiding slope 430. During the movement of the locking member 300 from the first position to the second position, the sixth guiding slope 341 cooperates with the fifth guiding slope 430. In the embodiment, the sixth guiding slope 341 on the first top block 340 cooperates with the fifth guiding slope 430, so that the first top block 340 abuts against the fifth guiding slope 430 via the sixth guiding slope 341, and a sliding resistance can be reduced during a relative sliding process of the first top block 340 and the fifth guiding slope 430.

For example, before the first top block 340 abuts against the fifth guiding slope 430, the sixth guiding slope 341 and the fifth guiding slope 430 may be substantially parallel to each other. After the first top block 340 abuts against the fifth guiding slope 430, the sixth guiding slope 341 may fit with the fifth guiding slope 430.

In some embodiments, referring to FIG. 21, the first top block 340 may also be configured as a deformable structure, for example, the first top block 340 may be a cantilever structure as shown in FIG. 21. Thus, the first top block 340 may be deformed after abutting against the base 400, and may adapt to gaps of different sizes between the base 400 and the connecting structure 200, which may cause lower requirements for processing errors and assembly errors and better applicability.

In some embodiments, the connecting structure 200 further includes a first stopping protrusion 230, and the first stopping protrusion 230 is fixed on the connecting structure 200. The first stopping protrusion 230 is configured to cooperate with a second stopping protrusion on the locking member 300, which may limit the movement range of the locking member 300. In the embodiment, the first stopping protrusion 230 on the connecting structure 200 cooperates with the second stopping protrusion on the locking member 300, which may limit the movement range of the locking member 300. For example, two first stopping protrusions 230 may be provided on the connecting structure 200, and the two stopping protrusions limit a movable range of locking member 300. When the locking member 300 moves within the movable range, the locking member 300 can move to the first position and the second position respectively.

Background technology that may be applied to the following embodiments is described herein. When the base 400 is coupled to the connecting structure 200 along the first direction, alignment between the base 400 and the connecting structure 200 is usually required. However, during actual use, it is difficult for the user to quickly find a correct position during installation, resulting in the base 400 and the connecting structure 200 being misaligned. As a result, the base 400 and the connecting structure 200 may be difficult to connect normally or may have an unstable connection.

Based on this, in some embodiments, referring to FIG. 5 and FIGS. 11-17, the connecting structure 200 may further include: a retractable guiding protrusion 240, where an extending-retracting direction of the guiding protrusion 240 intersects with the first direction; an elastic member 243, configured to cooperate with the guiding protrusion 240 to keep the guiding protrusion 240 biased outward; and a guiding groove 244, configured to receive the guiding protrusion 240 after the guiding protrusion 240 extends outward or is in an extended state. The guiding protrusion 240 may be disposed on the connecting structure 200. The guiding groove 244 may be disposed on the base 400. When the first limiting portion and the second limiting portion are locked with each other, the guiding protrusion 240 is embedded in the guiding groove 244. When the connecting structure 200 moves relative to the base 400 along the second direction, the guiding protrusion 240 retracts and passes over the guiding groove 244.

In the solution, when the first limiting portion and the second limiting portion are locked with each other, the extended guiding protrusion 240 is embedded in the guiding groove 244. Since an extending direction of the guiding protrusion 240 intersects with the first direction, when the base 400 is plugged in/inserted into the connecting structure 200 along the first direction, the base 400 can be plugged in the connecting structure 200 along the first direction only when the guiding protrusion 240 is overlapped with the guiding groove 244. Thus, through an engagement between the guiding protrusion 240 and the guiding groove 244, a relative position of the base 400 and the connecting structure 200 in the second direction can be limited, so that the base 400 can only be plugged in the connecting structure 200 in at a specific position, which may facilitate the users to connect the base 400 and the connecting structure 200 in a standardized manner.

When the base 400 and the connecting structure 200 are unlocked, the base 400 and the connecting structure 200 move relative to each other along the second direction, and the guiding protrusion 240 retracts under pressing of the guiding groove 244, and finally the guiding protrusion 240 passes over the guiding groove 244. Therefore, it does not limit relative movement between the base 400 and the connecting structure 200, which may facilitate smooth unlocking of the base 400 and the connecting structure 200.

Referring to FIGS. 12-17, for example, a limiting step 242 may be disposed on the guiding protrusion 240. The limiting step 242 abuts against an inner wall of the connecting structure 200, which may help reduce an occurrence of the limiting step 242 detaching from the connecting structure 200. The elastic member 243 may be, for example, a deformable structure, and the elastic member 243 abuts against an inner wall of the guiding protrusion 240. When the guiding protrusion 240 extends from a quick-release member, the limiting step 242 of the guiding protrusion 240 abuts against the inner wall of the connecting structure 200, and the inner side of the guiding protrusion 240 abuts against the elastic member 243.

Of course, the elastic member 243 may also be a spring, which will not be described in detail here.

In some embodiments, referring to FIG. 17, a seventh guiding slope 241 is disposed on a side of the guiding protrusion 240 cooperating with the guiding groove 244. A height of the seventh guiding slope 241 gradually changes along the second direction.

In this solution, the seventh guiding slope 241 can guide the guiding protrusion 240 to be embedded in the guiding groove 244, or guide the guiding protrusion 240 to pass over the first limiting groove 410. Specifically, when the base 400 is coupled to the connecting structure 200 along the first direction, when the guiding protrusion 240 is not completely aligned with the guiding groove 244, the seventh guiding slope 241 abuts against the first limiting groove 410, so as to provide a force or a torque to guide and align the guiding protrusion 240, thereby guiding the guiding protrusion 240 to align with the first limiting groove 410, and further aligning the base 400 with the connecting structure 200. During an unlocking process of the base 400 and the connecting structure 200, the base 400 and the connecting structure 200 move relatively in the second direction, and at this time, the seventh guiding slope 241 can abut against the guiding groove 244. A force exerted by the guiding groove 244 on the seventh guiding slope 241 causes the guiding protrusion 240 to gradually retract, and finally the guiding protrusion 240 passes over the guiding groove 244 under guidance of the seventh guiding slope 241, so as to achieve smooth unlocking of the base 400 and the connecting structure 200.

In some embodiments, referring to FIG. 17, along the second direction, the height of the seventh guiding slope 241 first increases and then decreases.

In the embodiment, along the second direction, the height of the seventh guiding slope 241 first increases and then decreases, so that when the base 400 and the connecting structure 200 move relatively toward either side in the second direction, the guiding protrusion 240 can be retracted through guiding action of the seventh guiding slope 241, so that the guiding protrusion 240 passes over the first limiting groove 410, thereby achieving smooth unlocking of the base 400 and the connecting structure 200.

For example, the base 400 and the connecting structure 200 can rotate relative to each other along the second direction. At a viewing angle shown in FIG. 4, the connecting structure 200 can rotate clockwise or counterclockwise relative to the base 400, both of which can enable the guiding protrusion 240 to pass over the first limiting groove 410, so that bidirectional unlocking of the connecting structure 200 and the base 400 can be achieved, and it is more convenient for the user to use.

Referring to FIG. 17, for example, the seventh guiding slope 241 may be an arc-shaped surface.

In other embodiments of the present disclosure, the difference from the above embodiments is that the guiding groove 244 is disposed on the connecting structure 200, and the guiding protrusion is disposed on the base 400. The relevant arrangement has been fully described in the above embodiments, and will not be described in detail here.

The background technology that may be applied to following embodiments is described herein. When the first limiting portion and the second limiting portion are locked with each other, the base 400 and the connecting structure 200 can be locked with each other. However, due to factors such as processing errors and assembly errors, etc., after the base 400 and the connecting structure 200 are locked with each other, there may be a certain gap between the base 400 and the connecting structure 200, causing the base 400 and the connecting structure 200 to shake relative to each other, and affecting the stability and the reliability of the connection. For example, when the base 400 is fixed on the fixed surface and the connecting structure 200 is connected to the output device, during use of the output device, the connecting structure 200 will shake relative to the base 400, affecting the stability of the connection and also aggravating the wear of the base 400 and the connecting structure 200.

Based on this, in an embodiment, a deformable second top block 250 and/or a deformable third top block is provided to fill the gap between the base 400 and the connecting structure 200.

In some embodiments, referring to FIG. 12, a deformable second top block 250 is disposed on a side of the connecting structure 200 facing the base 400. When the connecting structure 200 is locked with the base 400, the second top block 250 abuts against the base 400.

In the embodiment, the second top block 250 on the connecting structure 200 can abut against the base 400, so as to fill the gap between the base 400 and the connecting structure 200, which may help reduce shaking of the base 400 and the connecting structure 200, and may improve the stability of the connection between the base 400 and the connecting structure 200. By configuring the second top block 250 to be deformable, dimensional deviations caused by processing errors, assembly errors, etc., can be accommodated.

For example, the second top block 250 may be a rubber block.

In some embodiments, a deformable third top block is fixedly disposed on a side of the base 400 facing the connecting structure 200. When the connecting structure 200 is locked with the base 400, the third top block abuts against the connecting structure 200.

In the embodiment, the third top block on the base 400 can abut against the base 400, so as to fill the gap between the base 400 and the connecting structure 200, which may help reduce shaking of the base 400 and the connecting structure 200, and may improve the stability of the connection between the base 400 and the connecting structure 200. By configuring the third top block to be deformable, the dimensional deviations caused by the processing errors, the assembly errors, etc., can be accommodated.

For example, the third top block may be a rubber block.

In some possible embodiments, the third top block is disposed on the base 400, and the second top block 250 is disposed on the connecting structure 200.

In some embodiments, an angle sensor and/or a revolution sensor can be disposed on a motor shaft, a reel shaft, or any transmission shaft, and configured to record a rotation angle and/or the number of revolutions of the corresponding transmission shaft, and further calculate how long the cable 900 of the current output device has been pulled out based on a transmission ratio between the transmission shaft and the reel shaft, and a periphery of the reel shaft.

In some embodiments, one or more of the technical solutions of the universal cable outlet assembly 120, the technical solution of the winding reel 130 to fix the cable 900, the solution of arranging the cable on the winding reel 130 via the cable-arranging assembly 140, the solution of coupling the connecting structure 200 with the base 400, the solution of the connecting busbar 520 in the motor 500, and the solution of the battery 610 can be applied not only to the output device but also to the corresponding structures of other fitness equipment.

The description with reference to terms such as "an embodiment", "some embodiments", "specifically", or "some examples" means that a specific feature, structure, material, or characteristic described in conjunction with the embodiment or example is included in at least one embodiment or example of the present disclosure. In this specification, the exemplary expressions of the above terms do not necessarily refer to the same embodiment or example. Moreover, the described specific features, structures, materials, or characteristics may be combined in any one or more embodiments or examples in a suitable manner.

Although the embodiments of the present disclosure have been shown and described, those having ordinary skill in the art can understand that various changes, modifications, substitutions, and variations may be made to the embodiments without departing from the principle and spirit of the present disclosure, and the scope of the present disclosure is defined by the claims and their equivalents.

## Claims

1. An output device, **characterized by** comprising:
an output device body; and
a connecting structure (200), fixedly connected to the output device body and configured to be coupled to and locked with a base (400);
wherein the connecting structure (200) comprises an engaging member (210), an insertion groove (203) is defined on the connecting structure (200), an opening (201) is defined on a sidewall of the insertion groove (203), and the engaging member (210) is rotatable about a rotation shaft (202) located outside the insertion groove (203);
a distal end of the engaging member (210) is extended into the insertion groove (203) through the opening (201), the engaging member (210) is configured to be engaged into a limiting groove (410) defined on a peripheral wall of the base (400) after the base (400) is inserted into the insertion groove (203) along a first direction, and the base (400) and the connecting structure (200) are locked with each other in the first direction;
a first guiding slope (211) is provided on an outer sidewall of the engaging member (210); and
when the connecting structure (200) rotates relative to the base (400) along a peripheral direction of the insertion groove (203), a contact position between the first guiding slope (211) and an inner sidewall of the limiting groove (410) gradually moves toward the distal end of the engaging member (210) until the distal end of the engaging member (210) is unlocked from the limiting groove (410), and the base (400) and the connecting structure (200) are unlocked from each other in the first direction.

2. The output device according to claim 1, wherein
a second guiding slope (420) is provided on the inner sidewall of the limiting groove (410), and when the connecting structure (200) rotates relative to the base (400) along the peripheral direction of the insertion groove (203), the second guiding slope (420) is configured to abut against the engaging member (210) and guide the engaging member (210) to disengage from the limiting groove (410).

3. The output device according to claim 2, wherein an engaging surface (212) and a third guiding slope (213) are provided on the engaging member (210);
when the base (400) is inserted into the insertion groove (203) along the first direction, the engaging surface (212) is configured to contact a top wall of the limiting groove (410), and the engaging surface (212) is engaged with the limiting groove (410) in the first direction; and
the third guiding slope (213) is configured to abut against the connecting structure (200) and guide the engaging member (210) to rotate outward away from the limiting groove (410).

4. The output device according to claim 3, wherein at least one of the following is satisfied:
first guiding slopes (211) are respectively provided on two opposite outer sidewalls of the engaging member (210), and a distance between the two first guiding slopes (211) gradually decreases from a proximal end of the engaging member (210) to the distal end of the engaging member (210); or
second guiding slopes (420) are respectively provided on two opposite inner sidewalls of the limiting groove (410) along a peripheral direction of the base (400), and a distance between the two second guiding slopes (420) gradually decreases from an outer side of the base (400) to an inner side of the base (400) along a radial direction of the base (400).

5. The output device according to claim 1, wherein there are a plurality of engaging members (210), and there are a plurality of limiting grooves (410), the plurality of engaging members (210) are arranged at intervals along a peripheral direction of the connecting structure (200), the plurality of limiting grooves (410) are arranged at intervals along a peripheral direction of the base (400), and the plurality of limiting grooves (410) and the plurality of engaging members (210) are arranged in one-to-one correspondence.

6. The output device according to claim 5, further comprising: a locking member (300), movably disposed on the connecting structure (200);
Wherein when a corresponding one of the plurality of engaging members (210) is engaged into a corresponding one of the plurality of limiting grooves (410), the locking member (300) is configured to be movable relative to the connecting structure (200) and abut against the corresponding one of the plurality of engaging members (210) to limit the movement of the corresponding one of the plurality of engaging members (210);
the locking member (300) comprises a first position configured to allow the corresponding one of the plurality of engaging members (210) to move freely, and a second position configured to limit the movement of the corresponding one of the plurality of engaging members (210);
the locking member (300) is configured to move between the first position and the second position; and
the locking member (300) is annular and is rotatable relative to the connecting structure (200) to rotate to the first position or the second position.

7. The output device according to claim 6, wherein the locking member (300) is provided with a limiting protrusion (310) and a clearance slot (320);
when the locking member (300) moves to the second position, the limiting protrusion (310) is configured to abut against the corresponding one of the plurality of engaging members (210) to limit the movement of the corresponding one of the plurality of engaging members (210);
when the locking member (300) moves to the first position, the clearance slot (320) is overlapped with the corresponding one of the plurality of engaging members (210), so that the corresponding one of the plurality of engaging members (210) has freedom of movement to be unlocked from the limiting groove (410).

8. The output device according to claim 7, wherein the locking member (300) further comprises: a fourth guiding slope (330), connecting a corresponding limiting protrusion (310) and an adjacent corresponding clearance slot (320);
a height of the fourth guiding slope (330) gradually increases from the corresponding clearance slot (320) to the corresponding limiting protrusion (310).

9. The output device according to claim 6, wherein the locking member (300) is provided with a first top block (340);
when the locking member (300) moves to the second position, the first top block (340) is configured to abut against the base (400) in the first direction.

10. The output device according to claim 9, wherein a fifth guiding slope (430) is provided on a side of the base (400) facing the connecting structure (200);
along a moving direction of the locking member (300), a height of the fifth guiding slope (430) in the first direction gradually changes;
when the locking member (300) moves to the second position, the first top block (340) is configured to abut against the fifth guiding slope (430).

11. The output device according to claim 1, wherein at least one of the following is satisfied:
the connecting structure (200) is further provided with a force-applying member (220), the force-applying member (220) is disposed around the rotation shaft (202) of the engaging member (210), two ends of the force-applying member (220) are configured to respectively abut against the engaging member (210) and the connecting structure (200), and the force-applying member (220) is configured to bias the engaging member (210) toward the limiting groove (410) to keep the engaging member (210) engaged with the limiting groove (410); or
when the engaging member (210) is engaged with the limiting groove (410), a force exerted by the limiting groove (410) on the engaging member (210) is perpendicular to a movement direction of the engaging member (210) when the engaging member (210) is unlocked from the limiting groove (410).

12. The output device according to any one of claims 1 to 11, further comprising:
a guiding protrusion (240), configured to be retractable, wherein an extending-retraction direction of the guiding protrusion (240) intersects with the first direction;
an elastic member (243), configured to cooperate with the guiding protrusion (240) to keep the guiding protrusion (240) biased outward; and
a guiding groove (244), configured to receive the guiding protrusion (240) after the guiding protrusion (240) extends outward, wherein one of the guiding protrusion (240) and the guiding groove (244) is disposed on the base (400), and the other of the guiding protrusion (240) and the guiding groove (244) is disposed on the connecting structure (200);
wherein when the base (400) and the connecting structure (200) are locked with each other, the guiding protrusion (240) is embedded in the guiding groove (244);
when the connecting structure (200) rotates relative to the base (400) along the peripheral direction of the insertion groove (203), the guiding protrusion (240) is configured to retract and pass over the guiding groove (244).

13. The output device according to claim 12, wherein the insertion groove (203) is annular, the connecting structure (200) comprises an inner component and an outer component, the insertion groove (203) is defined by the inner component and the outer component, and the guiding protrusion (240) is disposed in the inner component and partially exposed into the insertion groove (203) from the inner component.

14. The output device according to any one of claims 1 to 11, wherein at least one of the following is satisfied:
a deformable second top block (250) is disposed on a side of the connecting structure (200) facing the base (400), and when the connecting structure (200) is locked with the base (400), the second top block (250) is configured to abut against the base (400); or
a deformable third top block is disposed on a side of the base (400) facing the connecting structure (200), and when the connecting structure (200) is locked with the base (400), the third top block is configured to abut against the connecting structure (200).

15. The output device according to claim 1, wherein the connecting structure (200) comprises at least two electrical contacts located at different positions, and the electrical contacts are connected to a short-circuit detection apparatus; and
there are four electrical contacts, which are respectively located at four corners of the connecting structure (200).
